# EUROPÄISCHE PATENTSCHRIFT

(11) **EP 2 242 779 B1**
(45) Veröffentlichungstag und Bekanntmachung des Hinweises auf die Patenterteilung: **17.08.2011**
(21) Anmeldenummer: 09709988.1
(22) Anmeldetag: 12.01.2009
(51) Int. Cl.: C08F 216/02, C08F 290/06

(54) **COPOLYMER MIT POLYETHERSEITENKETTEN UND HYDROXYALKYL- UND SÄUREBAUSTEINEN**
COPOLYMER COMPRISING POLYETHER SIDE CHAINS AND HYDROXYALKYL AND ACID STRUCTURAL UNITS
COPOLYMÈRE À CHAÎNES LATÉRALES DE POLYÉTHER ET MOTIFS HYDROXYALKYLÉS ET ACIDES

(30) Priorität: 13.02.2008 EP 08101595
(43) Veröffentlichungstag der Anmeldung: 27.10.2010
(73) Patentinhaber: Construction Research & Technology GmbH, 83308 Trostberg (DE)
(72) Erfinder: LORENZ, Klaus, 84539 Zangberg (DE); ALBRECHT, Gerhard, 83209 Prien (DE); FLAKUS, Silke, 85560 Ebersberg (DE); KRAUS, Alexander, 83552 Evenhausen (DE); MACK, Helmut, 83278 Traunstein (DE); WAGNER, Petra, 83308 Trostberg (DE); SCHOLZ, Christian, 83308 Trostberg (DE); WIMMER, Barbara, 83342 Tacherting (DE); HARTL, Angelika, 83342 Emertsham (DE); WINKLBAUER, Martin, 84553 Halsbach (DE)
(86) Internationale Anmeldenummer: PCT/EP2009/050261
(87) Internationale Veröffentlichungsnummer: WO 2009/100957

(56) Entgegenhaltungen:
- US-A1- 2002 193 547

## Beschreibung

Die vorliegende Erfindung betrifft ein Copolymer, die Herstellung des Copolymers sowie eine Baustoffmischung.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/ oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Vinyloxybutylenpoly(ethylenglykol)-Struktureinheiten aufweisen. Derartige Copolymertypen sind als Hochleistungsfließmittel weit verbreitet, da diese vorzügliche Anwendungseigenschaften aufweisen. In diesem Zusammenhang ist die Robustheit bzw. Universalität gegenüber der Verwendung verschiedener Zemente, unterschiedlichen Mischungsprozeduren sowie verschiedenen Anwendungstemperaturen besonders hervorzuheben. Der diese Hochleistungsfließmittel enthaltende Beton zeichnet sich normalerweise durch eine besonders gute Verarbeitbarkeit aus.

Das als monomeres Vorprodukt dieser Copolymere eingesetzte Vinyloxybutylenpoly(ethylenglykol) wird durch Ethoxylierung von 4-Hydroxybutylvinylether erhalten. 4-Hydroxybutylvinylether ist ein großtechnisches Folgeprodukt des Acetylens. Aufgrund der Tatsache, dass die auf Acetylen basierende Chemie (Reppe-Chemie) durch die auf Ethylen basierende Chemie weitestgehend abgelöst worden ist, ist die großtechnische Produktion von 4-Hydroxybutylvinylether an die wenigen noch Reppe-Chemie betreibenden Industriestandorte gebunden. Es ist außerdem regelmäßig davon auszugehen, dass 4-Hydroxybutylvinylether als Produkt der insbesondere aus sicherheitstechnischer Sicht aufwendigen Reppe-Chemie nicht besonders kostengünstig herstellbar ist bzw. sein wird. Das vorstehend gesagte wirkt sich entsprechend auch auf die Verfügbarkeit und die Kosten von Vinyloxybutylenpoly(ethylenglykol) sowie der entsprechenden Copolymere aus.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel/Wasserreduktionsmittel für Beton eignet.

Die Lösung dieser Aufgabe ist ein Copolymer aufweisend
i) 5 bis 55 Mol-% einer Isoprenolpolyetherderivat-Struktureinheit α,
ii) 2 bis 90 Mol-% einer Acrylsäurederivat-Struktureinheit β und
iii) 2 bis 90 Mol-% einer Hydroxyalkylacrylat-Struktureinheit γ,
wobei die Isoprenolpolyetherderivat-Struktureinheit α durch folgende allgemeine Formel (la) repräsentiert wird 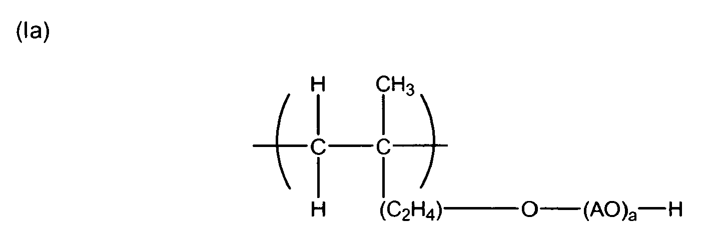 mit

A gleich oder verschieden sowie repräsentiert durch eine Alkylengruppe gemäß CₓH₂ₓ mit x = 2, 3, 4 oder 5,
a gleich oder verschieden und repräsentiert durch eine ganze Zahl zwischen 5 und 45,
die Acrylsäurederivat-Struktureinheit β durch folgende allgemeine Formeln (IIa) und/oder (IIb) repräsentiert wird 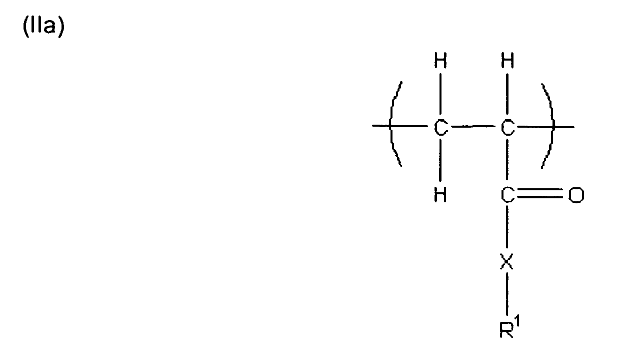 mit
X gleich oder verschieden und repräsentiert durch NH-(CₙH₂ₙ) mit n = 1, 2, 3 oder 4 oder repräsentiert durch O-(CₙH₂ₙ) mit n = 1, 2, 3 oder 4;
R¹ gleich oder verschieden und repräsentiert durch SO₃H, PO₃H₂, OPO₃H₂, und/oder C₆H₅-SO₃H 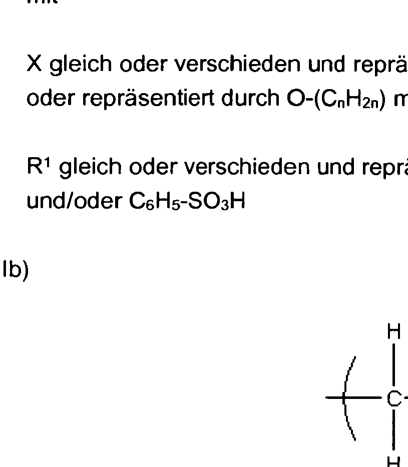 mit
R² gleich oder verschieden und repräsentiert durch OH, OM mit M = Na, K, Ca und/oder ONH₄
und die Hydroxyalkylacrylat-Struktureinheit γ durch folgende allgemeine Formel (III) repräsentiert wird
mit
R³ gleich oder verschieden und repräsentiert durch eine verzweigte oder unverzweigte C₁ - C₅ Monohydroxyalkylgruppe.

Die Bestimmung von a (Anzahl der Alkoxygruppen) in der Isoprenolpolyetherderivat-Struktureinheit α gemäß der allgemeinen Formel (la) erfolgt auf der Basis von so genannten MALDI-TOF-MS Messungen (MALDI-TOF-MS ist eine Abkürzung für Matrix Assisted Laser Desorption/Ionization Time Of Flight Massenspektroskopie). Die in diesem Zusammenhang durchgeführten MALDI-TOF-MS Messungen wurden auf einem " Bruker Reflex III" , ausgestattet mit einem 337 nm Stickstofflaser, durchgeführt. Die Beschleunigungsspannung betrug 20 kV und die Detektion der Kationenspektren erfolgte im Reflektormodus. Als Matrix wurde Dihydroxybenzoesäure (DHB) und als Salz Kaliumchlorid der Merck KGaA eingesetzt. Die Probenpräparation erfolgte als Feststoffpräparation. Hierfür wurde jeweils eine Spatelspitze der entsprechenden Probe in THF gelöst. Ein kleiner Teil der gelösten Probe wurde anschließend mit einer Spatelspitze DHB und einer Spatelspitze Kaliumchlorid in einem Mörser verrieben. Ein Teil dieser Mischung wurde mit einem Spatel auf ein Probentarget aufgetragen. Die Kalibrierung erfolgte mit einem externen Standard, welcher sich aus folgenden Peptiden zusammensetzte (Pepmix): 10 pm/µ I Bradikinin, 10 pm/µl Angiotensin I, 10 pm/µl Angiotensin II, 10 pm/µl Neurotensin und10 pm/µl ACTH. Die Peptide wurden in einem Gemisch aus 20 Gew.-% Acetonitril, 79,9 Gew.-% H₂O und 0,1 Gew.-% Ameisensäure gelöst. Der Pepmix wird zusätzlich mit H₂O verdünnt. Für die Kalibrierung wurde 1 µl Pepmix mit 1 µl DHB-Lösung auf einem Spot des Targets gemischt. Als Lösungsmittel für die DHB-Lösung wurde ein Methanol-Wasser Gemisch im Verhältnis 1:1 verwendet. Die Konzentration betrug 10 mg/ml.

Die Isoprenolpolyetherderivat-Struktureinheit α ist maßgeblich an der Dispergierwirkung des Copolymers beteiligt. Das Vorprodukt der entsprechenden monomeren Ausgangsverbindung ist Isoprenol (3-Methyl-3-buten-1-ol). Isoprenol ist ein Produkt der olefinischen Chemie, welches beispielsweise in großen Mengen als Zwischenprodukt bei der Citralsynthese anfällt. Allgemein kann gesagt werden, dass Isoprenol als ein in großen Mengen verfügbares und preisgünstiges Zwischenprodukt der chemischen Industrie angesehen werden kann. Daraus folgt eine entsprechend hohe wirtschaftliche Attraktivität der erfindungsgemäßen Copolymere, welche auf alkoxyliertem Isoprenol basieren. Zusätzlich ist wesentlich, dass die erfindungsgemäßen Copolymere die vorzüglichen Anwendungseigenschaften der Hochleistungsfließmittel aufweisen, welche vorstehend beschrieben sind.

Schließlich sollte bezüglich der Herstellung des Copolymers (Polymerisationsprozess) erwähnt sein, dass alkoxyliertes Isoprenol aufgrund der besonderen hohen Resistenz gegenüber saurer Hydrolyse im Vergleich zu Vinyloxybutylenpoly(ethylenglykol) verfahrenstechnisch leichter handhabbar ist.

Meist wird in der die Isoprenolpolyetherderivat-Struktureinheit α repräsentierenden allgemeinen Formel (la) x durch 2 und/oder 3, bevorzugt 2 repräsentiert. Ethoxygruppen oder Mischungen aus Ethoxy- und Propoxygruppen sind somit typisch.

In der die Isoprenolpolyetherderivat-Struktureinheit α repräsentierenden allgemeinen Formel (la) gilt bevorzugt für mindestens 20 Mol-%, besonders bevorzugt für mindestens 35 Mol-% aller (AO)ₐ Seitenkettensegmente a = 6 bis 15 und bevorzugt für weitere mindestens 20 Mol-%, besonders bevorzugt für weitere mindestens 35 Mol-% aller (AO)ₐ Seitenkettensegmente a = 19 bis 35. Dies kann dadurch erreicht werden, indem zwei verschiedene Typen von Isoprenolpolyetherderivat-Monomeren bei der Copolymerisation eingesetzt werden. Der eine Typ weist dann beispielsweise einen häufigkeitsmittleren Wert bezüglich a von 11 und der andere Typ entsprechend von ca. 24 auf. Diese Mischung von längeren und kürzeren Polyetherseitenketten in dem Copolymer erhöht dessen Anwendungsperformance.

Bevorzugt liegt die Isoprenolpolyetherderivat-Struktureinheit α mit einem relativen Anteil von 25 bis 50 Mol-%, besonders bevorzugt 30 bis 45 Mol-%, vor. In der Regel ist die Acrylsäurederivat-Struktureinheit β mit einem relativen Anteil von 35 bis 60 Mol-%, besonders bevorzugt 40 bis 55 Mol-%, vorhanden. Bevorzugt liegt die Hydroxyalkylacrylat-Struktureinheit γ mit einem relativen Anteil von 2 bis 30 Mol-%, besonders bevorzugt 6 bis 23 Mol-%, vor.

Meist wird die Acrylsäurederivat-Struktureinheit β durch die allgemeine Formel (IIb) repräsentiert. Normalerweise wird dann R² durch OH repräsentiert. Als die Acrylsäurederivat-Struktureinheit β erzeugendes Monomer wird somit bevorzugt Acrylsäure eingesetzt.

In einer bevorzugten Ausführungsform wird in der Hydroxyalkylacrylat-Struktureinheit γ, welche durch die allgemeine Formel (III) repräsentiert wird, R³ durch -CH₂-CHOH-CH₃, -CHCH₃-CH₂-OH und/oder -CH₂CH₂-OH repräsentiert.

Häufig weist das erfindungsgemäße Copolymer ein gewichtsmittleres Molekulargewicht von 10.000 bis 100.000 auf.

In der Regel liegt das erfindungsgemäße Copolymer in wässriger Lösung vor, die 30 bis 95 Gew.-% Wasser und 5 bis 70 Gew.-% gelöste Trockenmasse enthält. Die Trockenmasse besteht dann normalerweise im Wesentlichen aus dem wasserfreien Copolymer.

Das erfindungsgemäße Copolymer kann neben der Isoprenolpolyetherderivat-Struktureinheit α, der Acrylsäurederivat-Struktureinheit β und der Hydroxyalkylacrylat-Struktureinheit γ noch mindestens eine weitere Struktureinheit aufweisen. In einem solchen Fall kann das Copolymer aufweisen mindestens 1 Mol-% einer Isoprenol-Struktureinheit α, welche durch die allgemeine Formel (IVa) repräsentiert wird

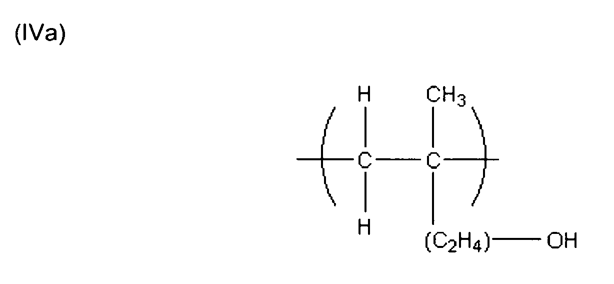

Durch die Einpolymerisation der Isoprenol-Struktureinheit α können die Seitenkettendichte und somit die Anwendungseigenschaften des Copolymers modifiziert werden.

Die Erfindung betrifft auch die Herstellung des erfindungsgemäßen Copolymers durch radikalische Lösungspolymerisation bei 0 bis 40 °C in Anwesenheit eines Redoxinitiators, wobei als Lösungsmittel Wasser eingesetzt wird. Allerdings kann das erfindungsgemäße Copolymer auch durch ein anderes beliebiges Verfahren hergestellt werden.

Außerdem betrifft die vorliegende Erfindung eine Baustoffmischung enthaltend erfindungsgemäßes Copolymer sowie ein hydraulisches Bindemittel und/oder ein latenthydraulisches Bindemittel. Typischerweise liegt das hydraulische Bindemittel als Zement, Kalk, Gips, Halbhydrat oder Anhydrit oder aus Mischungen dieser Komponenten, bevorzugt jedoch als Zement vor. Das latenthydraulische Bindemittel liegt normalerweise als Flugasche, Trass oder Hochofenschlacke vor.

Die vorliegende Erfindung soll im Folgenden näher anhand von Ausführungsbeispielen beschrieben werden.

Es sollen erfindungsgemäße Copolymere (gemäß den Herstellungsbeispielen 1 und 2) mit Copolymeren, welche bereits in der Praxis erfolgreich eingesetzt werden, (gemäß den Vergleichsbeispielen 1 und 2) bezüglich deren Performance verglichen werden.

### Herstellungsbeispiel 1 (Bsp. 1) - erfindungsgemäßer Copolymertyp 1

Ein Glasreaktor ausgestattet mit mehreren Zulaufmöglichkeiten, Rührer und Tropftrichter wurde mit 87 ml Wasser, 37,5 g Macromonomer 1 (hergestellt durch Ethoxylierung von 3-methyl-3-buten-1-ol mit 11 mol EO) und 82,5 g Macromonomer 2 (hergestellt durch Ethoxylierung von 3-methyl-3-buten-1-ol mit 22 mol EO) beschickt (Lösung A) und auf 16°C temperiert. Eine Teilmenge einer zweiten vorbereiteten, teilneutralisierten Lösung (Lösung B), bestehend aus 54,11 g Wasser, 19,34 g Acrylsäure (90 %) und 7,02 g Hydroxypropylacrylat (96 %) wurde über einen Zeitraum von 15 min in den Glasreaktor zu Lösung A gegeben. Weiterhin wurden 1,74 g 3-Mercaptopropionsäure in den Reaktor gegeben. Eine 3. Lösung (Lösung C), bestehend aus 3 g Natriumhydroxymethansulfinat-dihydrat und 47 g Wasser wurde vorbereitet. Darauf wurden bei einer Temperatur von 16 °C 46,5 mg Eisen-(II)-sulfat-Heptahydrat, gelöst in einigen Tropfen Wasser, sowie 2,87 g 30%ige Wasserstoffperoxidlösung zu Lösung A gegeben. Des Weiteren wurden über 45 Minuten die noch verbliebene Lösung B und über 60 Minuten Lösung C in die Lösung A dosiert. Zum Abschluss werden - 21 ml 20%ige Natriumhydroxid-Lösung zugegeben und ein pH-Wert von 6,5 eingestellt.

Es wurde die wässrige Lösung eines Copolymers mit einem mittleren Molgewicht von Mw = 24500 g/mol, einer Polydispersität von 1,66 und einem Feststoffgehalt von 44,3 % erhalten. Die Ausbeute an Polymer im Vergleich zu nicht einpolymerisiertem ungesätttigtem Alkoholethoxylat betrug 95 % (bestimmt durch Gelpermeationschromatographie, nachfolgend als GPC bezeichnet).

### Herstellungsbeispiel 2 (Bsp. 2) - erfindungsgemäßer Copolymertyp 2

Ein Glasreaktor ausgestattet mit mehreren Zulaufmöglichkeiten, Rührer und Tropftrichter wurde mit 87 ml Wasser, 37,5 g Macromonomer 1 (hergestellt durch Ethoxylierung von 3-methyl-3-buten-1-ol mit 11 mol EO) und 82,5 g Macromonomer 2 (hergestellt durch Ethoxylierung von 3-methyl-3-buten-1-ol mit 22 mol EO) beschickt (Lösung A) und auf 14°C temperiert. Eine Teilmenge einer zweiten vorbereiteten, teilneutralisierten Lösung (Lösung B), bestehend aus 58,9 g Wasser, 16,6 g Acrylsäure (90 %) und 11,7 g Hydroxypropylacrylat (96 %) wurde über einen Zeitraum von 15 min in den Glasreaktor zu Lösung A gegeben. Der verbleibende Rest mit 0,96 g 3-Mercaptopropionsäure wird ergänzt. Weiterhin wurden 1,92 g 3-Mercaptopropionsäure in den Reaktor gegeben. Eine 3. Lösung (Lösung C), bestehend aus 3 g Natriumhydroxymethansulfinat-dihydrat und 47 g Wasser wurde vorbereitet. Darauf wurden bei einer Temperatur von 14 °C 46,5 mg Eisen-(II)-sulfat-Heptahydrat gelöst in einigen Tropfen Wasser sowie 2,87 g 30%ige Wasserstoffperoxidlösung zu Lösung A gegeben. Des Weiteren wurden über 45 Minuten die noch verbliebene Lösung B und über 60 Minuten Lösung C in die Lösung A dosiert. Zum Abschluss werden 16,5 g 20%ige Natriumhydroxid-Lösung zugegeben und ein pH-Wert von 6,5 eingestellt.
Es wurde die wässrige Lösung eines Copolymers mit einem mittleren Molgewicht von Mw = 23000 g/mol, einer Polydispersität von 1,86 und einem Feststoffgehalt von
43,6 % erhalten. Die Ausbeute an Polymer im Vergleich zu nicht einpolymerisiertem ungesätttigtem Alkoholethoxylat betrug 97,7 % (bestimmt durch GPC).

### Vergleichsbeispiel 1 (Vgl. 1) - entsprechend zu Copolymertyp 1

Käufliches Betonfließmittel Glenium^{®} Sky 593 (von BASF Construction Polymers GmbH) auf Basis eines Copolymerisats aus Vinyloxybutylenpoly(ethylenglykol), einer ethylenisch ungesättigten Carbonsäure und eines ethylenisch ungesättigten Carbonsäurederivats - das Polymer gemäß Vergleichsbeispiel 1 weist gegenüber dem Copolymertyp 1 eine eng verwandte Polymerarchitektur auf.

### Vergleichsbeispiel 2 (Vgl. 2) - entsprechend zu Copolymertyp 2

Käufliches Betonfließmittel Glenium^{®} Sky 594 (von BASF Construction Polymers GmbH) auf Basis eines Copolymerisats aus Vinyloxybutylenpoly(ethylenglykol), einer ethylenisch ungesättigten Carbonsäure und eines ethylenisch ungesättigten Carbonsäurederivats - das Polymer gemäß Vergleichsbeispiel 2 weist gegenüber dem Copolymertyp 2 eine eng verwandte Polymerarchitektur auf.

Es soll zunächst das Polymerisationsverhalten bezüglich erzielter Molekulargewichtsverteilung und Umsatz betrachtet werden. Aus Tabelle 1 geht hervor, dass die Herstellung der erfindungsgemäßen Polymere mit jeweils etwas höheren Umsätzen erfolgt als die der Vergleichspolymere. Ein weiteres wichtiges Kriterium für eine gute Performance im Beton ist die mittlere Molmasse der Polymere.

**Tabelle 1: Molmassen und Umsätze der Copolymere**

| Polymer gemäß | M_{w} [g/mol] | Pd | Umsatz (%) |
|---|---|---|---|
| Bsp.1 | 24500 | 1,66 | 95 |
| Vgl.1 | 23200 | 1,67 | 90 |
| Bsp.2 | 23000 | 1,86 | 98 |
| Vgl.2 | 22800 | 1,68 | 94 |

In Tabelle 1 sind jeweils die Werte für M_{w} und für die Polydispersität (Pd) abgebildet. Beide erfindungsgemäßen Produkte weisen eine mittlere Molmasse im Bereich der Vergleichspolymere auf. Die Polydispersitäten liegen ebenfalls in einem vergleichbaren Bereich.

Zur weiteren Bewertung der Copolymere wurden Betontests durchgeführt. Die experimentellen Durchführungen sind in den Anwendungsbeispielen 1 und 2 beschrieben. Bei den Tests sollte geprüft werden, ob die erfindungsgemäßen Copolymere unter den gleichen Testbedingungen (w/z-Wert, Temperatur, Zuschläge, etc.) und bei gleicher Dosierung eine gute Performance, d.h. die gleiche Verflüssigung sowie das gleiche Fließmaß über die Zeit zeigen.

### Durchführung der Betontests:

280 kg Portlandzement (CEM I 42,5 R, Mergelstetten) wurden mit runden Zuschlägen, zusammengesetzt entsprechend der Fuller-Sieblinie mit einem Größtkorn von 16 mm, 80 kg Kalksteinmehl-Füller Calcit MS 12 und 156,8 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes sowie dessen zeitliche Veränderung über einen Zeitraum von 60 Minuten.

### Die Ergebnisse der Prüfung sind nachstehend tabellarisch aufgeführt.

280 kg Portlandzement (CEM I 42,5 R, Karlstadt) wurden mit runden Zuschlägen, zusammengesetzt entsprechend der Fuller-Sieblinie mit einem Größtkorn von 16 mm, 80 kg Kalksteinmehl-Füller Calcit MS 12 und 162,4 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes sowie dessen zeitliche Veränderung über einen Zeitraum von 60 Minuten.

### Die Ergebnisse sind in den nachstehenden Tabellen aufgezeigt.

**Tabelle 2:**

| Zusatzmittel | Feststoff [Gew.-%] | Dosierung [Gew.-%] | Fließmaß in cm nach | | | |
|---|---|---|---|---|---|---|
| | | | 0 min. | 10 min. | 30 min. | 60 min. |
| Bsp.1 | 30 | 0,18 | 64,5 | 61 | 58 | 54,5 |
| Vgl.1 | 30 | 0,18 | 64 | 60 | 57 | 54 |
| Bsp.2 | 30 | 0,18 | 60 | 59 | 55,5 | 54 |
| Vgl.2 | 30 | 0,18 | 62 | 59 | 56 | 54,5 |
| w/z = 0,56, Zement: Mergelstetten | | | | | | |

Tabelle 2 zeigt die Ergebnisse der Betontests unter Verwendung von Mergelstettenzement. Für beide Beispielpolymere kann bei gleicher Dosierung eine nahezu identische Verflüssigung beobachtet werden. Zudem können sie wie die Vergleichspolymere das Fließmaß über 60 Minuten annähernd konstant halten. Auch der Test unter Verwendung des Karlstädter Zements zeigt ein nahezu identisches Verhalten der Beispielpolymere mit ihren Referenzen (Tabelle 3).

**Tabelle 3:**

| Zusatzmittel | Feststoff [Gew.-%] | Dosierung [Gew.-%] | Fließmaß in cm nach | | | |
|---|---|---|---|---|---|---|
| | | | 0 min. | 10 min. | 30 min. | 60 min. |
| Bsp.1 | 30 | 0,18 | 55 | 57 | 57 | 55 |
| Vgl.1 | 30 | 0,18 | 57 | 58 | 58 | 56 |
| Bsp.2 | 30 | 0,18 | 58,5 | 61 | 60,5 | 59 |
| Vgl.2 | 30 | 0,18 | 58,5 | 60 | 61,5 | 59,5 |
| w/z = 0,58 für Bsp. 1 und 0,63 für Bsp. 2; Zement: Karlstadt | | | | | | |

Die Ergebnisse zeigen, dass die erfindungsgemäßen Copolymere bezüglich ihres Verhaltens im Beton vergleichbare Eigenschaften wie die bekannten Hochleistungsfließmittel aufweisen. Darüber hinaus wird durch die Verwendung verschiedener Zemente auch die Robustheit/Universalität der erfindungsgemäßen Copolymere bestätigt.

**Tabelle 4:**

| Zusatzmittel | Feststoff [Gew.-%] | Dosierung [Gew.-%] | Slump-Flow in cm nach | | | |
|---|---|---|---|---|---|---|
| | | | 0 min. | 10 min. | 30 min. | 60 min. |
| Bsp.1 | 30 | 0,18 | 44 | 42 | 35,5 | 32 |
| Vgl.1 | 30 | 0,18 | 44,5 | 41,5 | 34 | 29,5 |
| w/z = 0,56; Zement: Mergelstetten | | | | | | |

Tabelle 4 zeigt die Ergebnisse für den Slump-Flow anhand von Beispiel 1 und dem entsprechenden Vergleichspolymer. Unter Verwendung der gleichen Dosierung ist auch hier ein vergleichbares Verhalten zu beobachten. Dies ist eine weitere Bestätigung dafür, dass durch den Zusatz der erfindungsgemäßen Copolymere ein Beton entsteht, der eine vergleichbare Konsistenz und eine ebenso gute Verarbeitbarkeit aufweist, wie es bei Einsatz der als Referenz hinzugezogenen erfolgreichen Hochleistungsfließmittel der Fall ist.

### Gesamtfazit der Ergebnisse der Vergleichsversuche:

Die vorstehenden Versuche zeigen, dass die Qualität der Fließmittel auf Basis der erfindungsgemäßen Copolymere hervorragend ist. Die Performance ist vergleichbar mit den sich bereits in der Praxis bewährten Hochleistungspolymeren auf Basis von Vinyloxybutylenpoly(ethylenglykol).

## Patentansprüche

1. Copolymer aufweisend
i) 5 bis 55 Mol-% einer Isoprenolpolyetherderivat-Struktureinheit α,
ii) 2 bis 90 Mol-% einer Acrylsäurederivat-Struktureinheit β und
iii) 2 bis 90 Mol-% einer Hydroxyalkylacrylat-Struktureinheit γ,
wobei die Isoprenolpolyetherderivat-Struktureinheit α durch folgende allgemeine Formel (Ia) repräsentiert wird 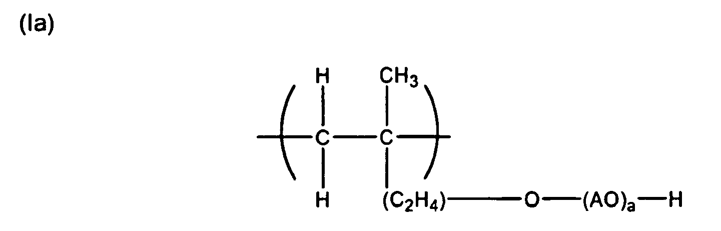 mit
A gleich oder verschieden sowie repräsentiert durch eine Alkylengruppe gemäß CₓH₂ₓ mit x = 2, 3, 4 oder 5,
a gleich oder verschieden und repräsentiert durch eine ganze Zahl zwischen 5 und 45, wobei in der die Isoprenolpolyetherderivat-Struktureinheit α repräsentierenden allgemeinen Formel (Ia) für mindestens 20 Mol-%, bevorzugt mindestens 35 Mol% aller (AO)ₐ Seitenkettensegmente a = 6 bis 15 und für weitere mindestens 20 Mol-%, bevorzugt mindestens 35 Mol-% aller (AO)ₐ Seitenkettensegmente a = 19 bis 35, gilt,
die Acrylsäurederivat-Struktureinheit β durch folgende allgemeine Formeln (IIa) und/oder (IIb) repräsentiert wird 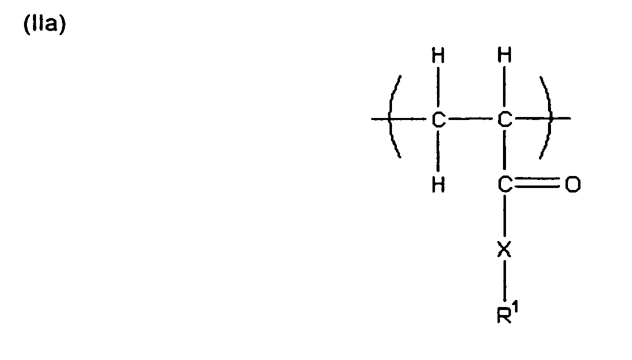 mit
X gleich oder verschieden und repräsentiert durch NH-(CₙH₂ₙ) mit n = 1, 2, 3 oder 4 oder repräsentiert durch O-(CₙH₂ₙ) mit n = 1, 2, 3 oder 4;
R¹ gleich oder verschieden und repräsentiert durch SO₃H, PO₃H₂, OPO₃H₂, und/oder C₆H₅-SO₃H 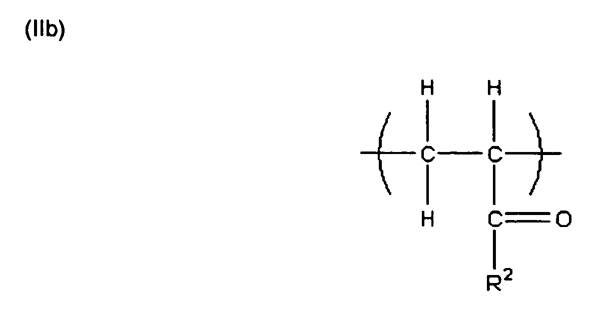 mit
R² gleich oder verschieden und repräsentiert durch OH, OM mit M = Na, K, Ca und/oder ONH₄
und die Hydroxyalkylacrylat-Struktureinheit γ durch folgende allgemeine Formel (III) repräsentiert wird 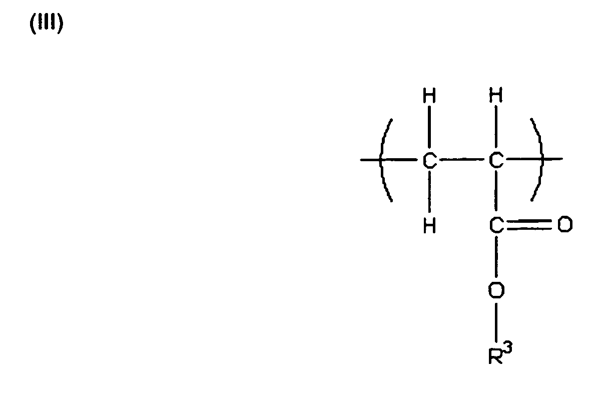 mit
R³ gleich oder verschieden und repräsentiert durch eine verzweigte oder unverzweigte C₁ - C₅ Monohydroxyalkylgruppe.

2. Copolymer nach Anspruch 1, **dadurch gekennzeichnet, dass** in der die Isoprenolpolyetherderivat-Struktureinheit α repräsentierenden allgemeinen Formel (Ia) x durch 2 und/oder 3, bevorzugt 2 repräsentiert wird.

3. Copolymer nach einem der Ansprüche 1 bis 2, **dadurch gekennzeichnet, dass** die Isoprenolpolyetherderivat-Struktureinheit α mit einem relativen Anteil von 25 bis 50 Mol-%, bevorzugt 30 bis 45 Mol-%, vorliegt.

4. Copolymer nach einem der Ansprüche 1 bis 3, **dadurch gekennzeichnet, dass** die Acrylsäurederivat-Struktureinheit β mit einem relativen Anteil von 35 bis 60 Mol-%, bevorzugt 40 bis 55 Mol-%, vorhanden ist.

5. Copolymer nach einem der Ansprüche 1 bis 4, **dadurch gekennzeichnet, dass** die Hydroxyalkylacrylat-Struktureinheit γ mit einem relativen Anteil von 2 bis 30 Mol-%, bevorzugt 6 bis 23 Mol-%, vorliegt.

6. Copolymer nach einem der Ansprüche 1 bis 5, **dadurch gekennzeichnet, dass** die Acrylsäurederivat-Struktureinheit β durch die allgemeine Formel (IIb) repräsentiert wird.

7. Copolymer nach Anspruch 6, **dadurch gekennzeichnet, dass** die Acrylsäurederivat-Struktureinheit β durch die allgemeine Formel (IIb) repräsentiert wird und dass R² durch OH repräsentiert wird.

8. Copolymer nach einem der Ansprüche 1 bis 7, **dadurch gekennzeichnet, dass** in der Hydroxyalkylacrylat-Struktureinheit γ, welche durch die allgemeine Formel (III) repräsentiert wird, R³ durch -CH₂-CHOH-CH₃, -CHCH₃-CH₂-OH und/oder -CH₂-CH₂-OH repräsentiert wird.

9. Copolymer nach einem der Ansprüche 1 bis 8, aufweisend ein gewichtsmittleres Molekulargewicht von 10.000 bis 100.000.

10. Copolymer nach einem der Ansprüche 1 bis 9, welches in wässriger Lösung vorliegt, die 30 bis 95 Gew.-% Wasser und 5 bis 70 Gew.-% gelöste Trockenmasse enthält.

11. Copolymer nach einem der Ansprüche 1 bis 10, welches neben der Isoprenolpolyetherderivat-Struktureinheit α, der Acrylsäurederivat-Struktureinheit β und der Hydroxyalkylacrylat-Struktureinheit γ noch mindestens eine weitere Struktureinheit aufweist.

12. Copolymer nach Anspruch 11, aufweisend
iv) mindestens 1 Mol-% einer Isoprenol-Struktureinheit α welche durch die allgemeinen Formel (IVa) repräsentiert wird

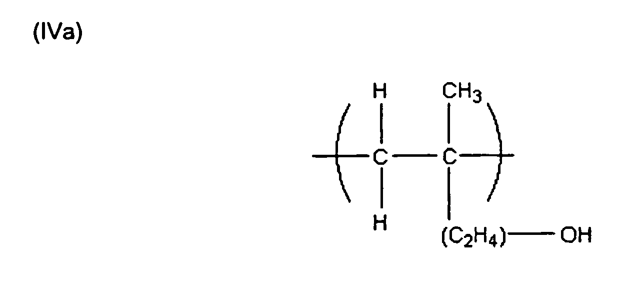

13. Herstellung eines Copolymers gemäß einem der Ansprüche 1 bis 12 durch radikalische Lösungspolymerisation bei 0 bis 40 °C in Anwesenheit eines Redoxinitiators, wobei als Lösungsmittel Wasser eingesetzt wird.

14. Baustoffmischung enthaltend Copolymer gemäß einem der Ansprüche 1 bis 12 sowie ein hydraulisches Bindemittel und/oder ein latenthydraulisches Bindemittel.

15. Baustoffmischung nach Anspruch 14, **dadurch gekennzeichnet, dass** das hydraulische Bindemittel als Zement, Kalk, Halbhydrat, Anhydrit oder Gips, bevorzugt als Zement vorliegt.

16. Baustoffmischung nach Anspruch 14, **dadurch gekennzeichnet, dass** das latenthydraulische Bindemittel als Flugasche, Trass oder Hochofenschlacke vorliegt.

## Claims

1. Copolymer comprising
i) 5 to 55 mol% of an isoprenol polyether derivative structural unit α,
ii) 2 to 90 mol% of an acrylic acid derivative structural unit β and
iii) 2 to 90 mol% of a hydroxyalkyl acrylate structural unit γ,
the isoprenol polyether derivative structural unit α being represented by the following general formula (Ia) 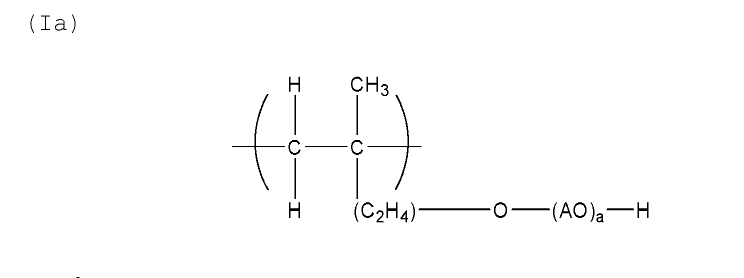 where
A is identical or different and is represented by an alkylene group according to CₓH₂ₓ where x = 2, 3, 4 or 5,
a is identical or different and is represented by an integer between 5 and 45, in the general formula (Ia) representing the isoprenol polyether derivative structural unit α, a = 6 to 15 for at least 20 mol%, preferably at least 35 mol%, of all (AO)ₐ side chain segments and a = 19 to 35 for a further at least 20 mol%, preferably at least 35 mol%, of all (AO)ₐ side chain segments,
the acrylic acid derivative structural unit β being represented by the following general formulae (IIa) and/or (IIb) 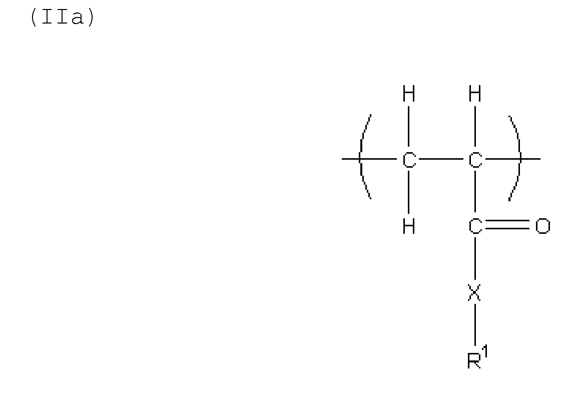 where
X is identical or different and is represented by NH-(CₙH₂ₙ) where n = 1, 2, 3 or 4 or represented by O-(CₙH₂ₙ) where n = 1, 2, 3 or 4;
R¹ is identical or different and is represented by SO₃H, PO₃H₂, OPO₃H₂ and/or C₆H₅-SO₃H 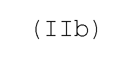 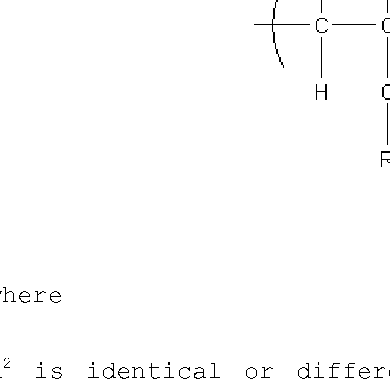 where
R² is identical or different and is represented by OH, OM where M = Na, K, Ca and/or ONH₄
and the hydroxyalkyl acrylate structural unit γ being represented by the following general formula (III) 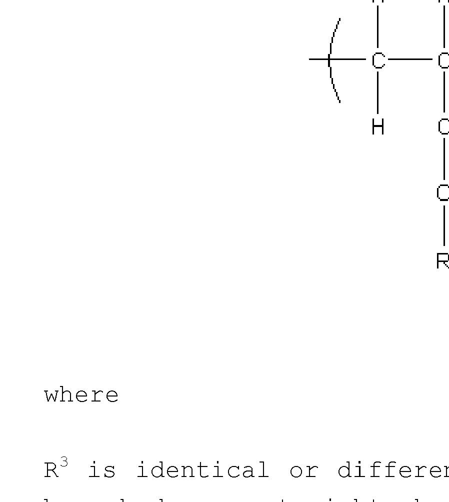 where
R³ is identical or different and is represented by a branched or straight-chain C₁-C₅ monohydroxyalkyl group.

2. Copolymer according to Claim 1, **characterized in that**, in the general formula (Ia) representing the isoprenol polyether derivative structural unit α, x is represented by 2 and/or 3, preferably 2.

3. Copolymer according to either of Claims 1 and 2, **characterized in that** the isoprenol polyether derivative structural unit α is present in a relative proportion of 25 to 50 mol%, preferably 30 to 45 mol%.

4. Copolymer according to any of Claims 1 to 3, **characterized in that** the acrylic acid derivative structural unit β is present in a relative proportion of 35 to 60 mol%, preferably 40 to 55 mol%.

5. Copolymer according to any of Claims 1 to 4, **characterized in that** the hydroxyalkyl acrylate structural unit γ is present in a relative proportion of 2 to 30 mol%, preferably 6 to 23 mol%.

6. Copolymer according to any of Claims 1 to 5, **characterized in that** the acrylic acid derivative structural unit β is represented by the general formula (IIb).

7. Copolymer according to Claim 6, **characterized in that** the acrylic acid derivative structural unit β is represented by the general formula (IIb) and R² is represented by OH.

8. Copolymer according to any of Claims 1 to 7, **characterized in that**, in the hydroxyalkyl acrylate structural unit γ which is represented by the general formula (III), R³ is represented by -CH₂-CHOH-CH₃, -CHCH₃-CH₂-OH and/or -CH₂-CH₂-OH.

9. Copolymer according to any of Claims 1 to 8, having a weight-average molecular weight of 10 000 to 100 000.

10. Copolymer according to any of Claims 1 to 9, which is present in aqueous solution which contains 30 to 95% by weight of water and 5 to 70% by weight of dissolved dry matter.

11. Copolymer according to any of Claims 1 to 10, which, in addition to the isoprenol polyether derivative structural unit α, the acrylic acid derivative structural unit β and the hydroxyalkyl acrylate structural unit γ, also has at least one further structural unit.

12. Copolymer according to Claim 11, comprising iv) at least 1 mol% of an isoprenol structural unit α which is represented by the general formula (IVa)

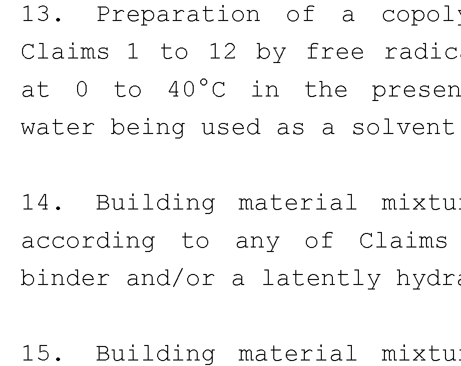

13. Preparation of a copolymer according to any of Claims 1 to 12 by free radical solution polymerization at 0 to 40°C in the presence of a redox initiator, water being used as a solvent.

14. Building material mixture containing a copolymer according to any of Claims 1 to 12 and a hydraulic binder and/or a latently hydraulic binder.

15. Building material mixture according to Claim 14, **characterized in that** the hydraulic binder is present as cement, lime, hemihydrate, anhydrite or gypsum, preferably as cement.

16. Building material mixture according to Claim 14, **characterized in that** the latently hydraulic binder is present as fly ash, trass or blast furnace slag.

## Revendications

1. Copolymère comprenant
i) 5 à 55 % en moles d'un motif structural α dérivé de polyéther d'isoprénol,
ii) 2 à 90 % en moles d'un motif structural β dérivé d'acide acrylique et
iii) 2 à 90 % en moles d'un motif structural γ acrylate d'hydroxyalkyle,
le motif structural α dérivé de polyéther d'isoprénol étant représenté par la formule générale (Ia) suivante 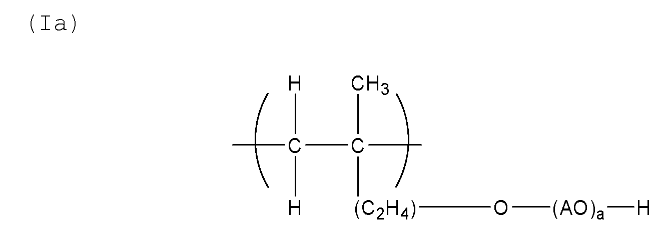 où
A est le même ou différent ainsi que représenté par un groupe alkylène selon CₓH₂ₓ où x = 2, 3, 4 ou 5,
a est le même ou différent et représenté par un nombre entier compris entre 5 et 45, dans la formule (Ia) représentant le motif structural α dérivé de polyéther d'isoprénol, a valant de 6 à 15 pour au moins 20 % en moles, de préférence au moins 35 % en moles de tous les segments de chaîne latérale (AO)ₐ et a valant de 19 à 35 pour encore au moins 20 % en moles, de préférence au moins 35 % en moles de tous les segments de chaîne latérale (AO)ₐ,
le motif structural β dérivé d'acide acrylique étant représenté par la formule générale (IIa) et/ou la formule générale (IIb) suivantes 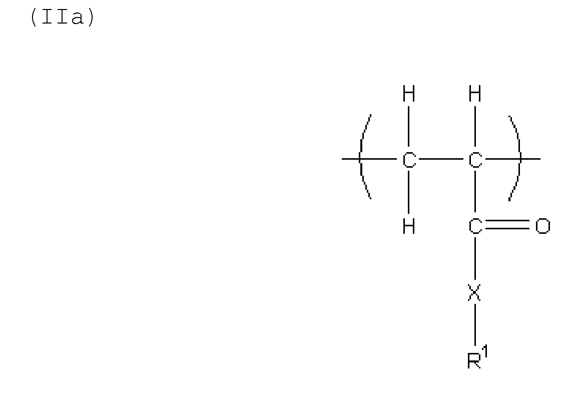 où
X est le même ou different et représenté par NH-(CₙH₂ₙ) où n = 1, 2, 3 ou 4 ou représenté par O-(CₙH₂ₙ) où n = 1, 2, 3 ou 4 ;
R¹ est le même ou différent et représenté par SO₃H, PO₃H₂, OPO₃H₂ et/ou C₆H₅-SO₃H 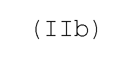 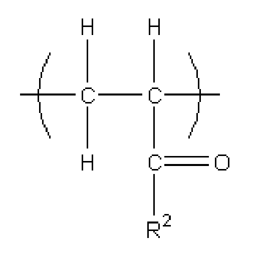 où
R² est le même ou différent et représenté par OH, OM où M = Na, K, Ca et/ou ONH₄
et le motif structural γ acrylate d'hydroxyalkyle étant représenté par la formule générale (III) 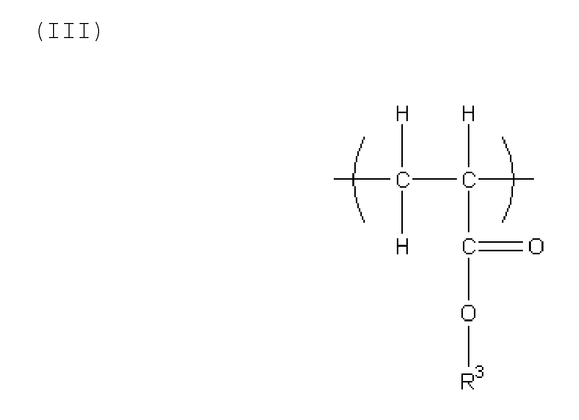 où
R³ est le même ou différent et représenté par un groupe monohydroxyalkyle en C₁-C₅ ramifié ou non ramifié.

2. Copolymère selon la revendication 1, **caractérisé en ce que** dans la formule générale (Ia) représentant le motif structural α dérivé de polyéther d'isoprénol x est représenté par 2 et/ou 3, de préférence 2.

3. Copolymère selon l'une quelconque des revendications 1 et 2, **caractérisé en ce que** le motif structural α dérivé de polyéther d'isoprénol est présent en une proportion relative de 25 à 50 % en moles, de préférence de 30 à 45 % en moles.

4. Copolymère selon l'une quelconque des revendications 1 à 3, **caractérisé en ce que** le motif structural β dérivé d'acide acrylique est présent en une proportion relative de 35 à 60 % en moles, de préférence de 40 à 55 % en moles.

5. Copolymère selon l'une quelconque des revendications 1 à 4, **caractérisé en ce que** le motif structural γ acrylate d'hydroxyalkyle est présent en une proportion relative de 2 à 30 % en moles, de préférence de 6 à 23 % en moles.

6. Copolymère selon l'une quelconque des revendications 1 à 5, **caractérisé en ce que** le motif structural β dérivé d'acide acrylique est représenté par la formule générale (IIb).

7. Copolymère selon la revendication 6, **caractérisé en ce que** le motif structural β dérivé d'acide acrylique est représenté par la formule générale (IIb) et **en ce que** R² est représenté par OH.

8. Copolymère selon l'une quelconque des revendications 1 à 7, **caractérisé en ce que** dans le motif structural γ acrylate d'hydroxyalkyle, qui est représenté par la formule générale (III), R³ est représenté par la formule -CH₂-CHOH-CH₃, -CHCH₃-CH₂-OH et/ou -CH₂-CH₂-OH.

9. Copolymère selon l'une quelconque des revendications 1 à 8, ayant une masse moléculaire moyenne en poids de 10 000 à 100 000.

10. Copolymère selon l'une quelconque des revendications 1 à 9, qui est présent en solution aqueuse qui contient de 30 à 95 % en poids d'eau et de 5 à 70 % en poids de matière sèche dissoute.

11. Copolymère selon l'une quelconque des revendications 1 à 10, qui en plus du motif structural α dérivé de polyéther d'isoprénol, du motif structural β dérivé d'acide acrylique et du motif structural γ acrylate d'hydroxyalkyle, contient encore au moins un autre motif structural.

12. Copolymère selon la revendication 11, comportant
iv) au moins 1 % en moles d'un motif structural α' isoprénol, qui est représenté par la formule générale (IVa)

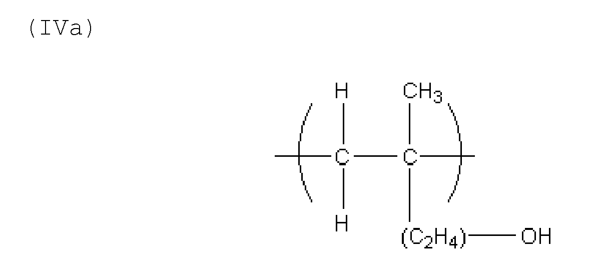

13. Préparation d'un copolymère selon l'une quelconque des revendications 1 à 12, par polymérisation radicalaire en solution, à une temperature de 0 à 40 °C, en présence d'un amorceur redox, l'eau étant utilisée comme solvant.

14. Composition de matériau de construction, contenant un copolymère selon l'une quelconque des revendications 1 à 12 ainsi qu'un liant hydraulique et/ou un liant hydraulique latent.

15. Composition de matériau de construction selon la revendication 14, **caractérisée en ce que** le liant hydraulique est présent sous forme de ciment, chaux, semi-hydrate, anhydrite ou plâtre, de préférence sous forme de ciment.

16. Composition de matériau de construction selon la revendication 14, **caractérisée en ce que** le liant hydraulique latent est present sous forme de cendre volante, tuf ou laitier de haut-fourneau.
